# EUROPÄISCHE PATENTSCHRIFT

(11) **EP 2 724 000 B1**
(45) Veröffentlichungstag und Bekanntmachung des Hinweises auf die Patenterteilung: **13.09.2017**
(21) Anmeldenummer: 12726044.6
(22) Anmeldetag: 25.05.2012
(51) Int. Cl.: F01N 3/24, F01N 3/20

(54) **KÜHLBARES DOSIERMODUL**
COOLED METERING UNIT
UNITÉ DE DOSAGE REFROIDIE

(30) Priorität: 22.06.2011 DE 102011077955
(43) Veröffentlichungstag der Anmeldung: 30.04.2014
(73) Patentinhaber: Robert Bosch GmbH, 70442 Stuttgart (DE)
(72) Erfinder: KIONTKE, Martin, 71254 Ditzingen (DE); WINKLER, Jochen, 73730 Esslingen (DE)
(86) Internationale Anmeldenummer: PCT/EP2012/059860
(87) Internationale Veröffentlichungsnummer: WO 2012/175285

(56) Entgegenhaltungen:
- EP-A1- 1 662 108
- EP-A1- 2 705 229
- WO-A1-2012/049175
- DE-A1-102006 061 730
- DE-A1-102007 003 120
- DE-A1-102009 014 828
- DE-A1-102010 040 003

## Beschreibung

### Stand der Technik:

Die Erfindung betrifft ein kühlbares Dosiermodul, das zum Einspritzen eines Fluids in den Abgasstrang eines Verbrennungsmotors ausgebildet ist.

Es ist bekannt, den Abgasen eines Verbrennungsmotors, insbesondere eines Dieselmotors, mit Hilfe eines Dosiermoduls ein Fluid, insbesondere eine wässrige Harnstofflösung, beizufügen, um in den Abgasen vorhandene Schadstoffe, insbesondere Stickoxide (NOₓ), zu reduzieren. Ein derartiges System zur Reduktion von Stickoxiden wird beispielsweise in US 5,522,218 beschrieben.

Wenn das Dosiermodul in Bereichen mit hoher Umgebungstemperatur, z. B. abgasnah, in der Nähe des Motors und/oder in verkleideten Bereichen, verbaut wird, ist eine passive Kühlung durch die Umgebungsluft nicht mehr ausreichend. Um ein Überhitzen des Dosiermoduls zu verhindern, muss daher eine aktive Wasserkühlung implementiert werden.

Bei den bisher bekannten wassergekühlten Dosiermodulen wird mit Hilfe eines Alu-Druckgusskörpers dafür gesorgt, dass die hohen Temperaturen des Abgasstrangs keinen schädigenden Einfluss auf das Dosiermodul haben. Die derzeit verwendeten Druckgusskörper haben sowohl funktionale als auch kommerzielle Nachteile, da ihre Kühlwirkung und chemische Beständigkeit begrenzt und die Herstellung teuer ist.

EP 1 662 108 A1 offenbart eine Abgasanlage für eine Brennkraftmaschine, insbesondere in einem Kraftfahrzeug, mit einem Abgas von der Brennkraftmaschine wegführenden Abgasstrang und mit wenigstens einer Einspritzdüse zum Einspritzen von Kraftstoff in den Abgasstrang. Die Einspritzdüse ist über eine Haltevorrichtung ist am Abgasstrang befestigt. Die Haltevorrichtung ist einen Aufnahmekörper auf, in den die Einspritzdüse eingesetzt ist. Der Aufnahmekörper ist über einen scheibenförmigen Flansch am Abgasstrang befestigt, wobei der Flansch über eine Querschnittseinschnürung am Aufnahmekörper und/oder über einen thermischen Isolator am Abgasstrang angebracht ist.

Das nachveröffentlichte Dokument WO 2012/152466 A1 offenbart einen Injektor zum Dosieren von Reduktionsmittel zum Abgas einer Brennkraftmaschine, mit einem Kühlkörper der von einem Hitzeschild umschlossen ist, wobei die Kontaktfläche zwischen dem Hitzeschild und dem Kühlkörper minimiert ist. An der Spitze des Injektors ist eine Düse vorgesehen, die das Reduktionsmittel zu einem feinen Spray vernebelt. Der Injektor ist am Stutzen des Abgasrohres mittels des Flanschs befestigt, welcher wiederum in eine dünnwandige becherartig Vertiefung übergeht, die das, dem Abgasrohr zugewandte, Ende des Injektors umschließt. Ein topfartiges Gehäuse ist von außen über die becherartige Vertiefung gestülpt, so dass der Flansch das Gehäuse oben abdichtet. Ein Innendurchmesser des Gehäuses ist so gewählt, dass sich zwischen dem Gehäuse und der becherartige Vertiefung ein Hohlraum ausbildet, der über jeweils einen Zu- und Ablaufstutzen mit einem Kühlwasserstrom beaufschlagt wird. Ein erster Boden der becherförmigen Vertiefung und ein zweiter Boden des Gehäuses verfügen jeweils über eine Öffnung, durch die das von der Düse vernebelte Reduktionsmittel in das Abgasrohr gelangt. Der erste Boden und der zweite Boden stehen dabei in Kontakt miteinander, so dass kein Kühlmittel aus dem Hohlraum in die Öffnung gelangt.

### Offenbarung der Erfindung:

Eine Aufgabe der Erfindung ist es, ein verbessertes wassergekühltes Dosiermodul zum Einspritzen eines Fluids in einen Abgasstrang bereitzustellen, das insbesondere einfach und kostengünstig herzustellen ist.

Die Aufgabe wird durch ein kühlbares Dosiermodul nach dem unabhängigen Patentanspruch 1 gelöst. Die abhängigen Patentansprüche beschreiben vorteilhafte Ausgestaltungen eines erfindungsgemäßen Dosiermoduls.

Ein erfindungsgemäßes kühlbares Dosiermodul enthält einen sich im Wesentlichen in einer Längsrichtung erstreckenden Injektor, eine innere Hülse, die über einen Teilbereich der Längserstreckung des Injektors um den Umfang des Injektors ausgebildet ist, und eine äußere Hülse, die den Umfang der inneren Hülse umgibt, so dass zwischen der inneren Hülse und der äußeren Hülse ein zur Aufnahme von Kühlwasser geeignetes Kühlvolumen ausgebildet ist. Die innere Hülse hat an einem Ende einen um den Umfang der inneren Hülse umlaufenden Kragen. In diesen Kragen ist ein Endbereich der äußeren Hülse derart eingepasst, dass die innere Hülse und die äußere Hülse fluiddicht miteinander verbunden sind.

Durch einen derartigen an der inneren Hülse ausgebildeten Kragen kann auf einen in der Herstellung aufwendigen und teuren Drehflansch, wie er in herkömmlichen kühlbaren Dosiermodulen verwendet wird, um die äußere mit der inneren Hülse zu verbinden, verzichtet werden. Die Erfindung ermöglicht eine kostengünstige und gleichzeitig zuverlässige Verbindung der äußeren Hülse mit der inneren Hülse, um ein fluiddichtes Volumen zur Aufnahme eines Kühlmittel zu schaffen. Dabei ist ein Bereich der äußeren Hülse vorzugsweise mit einem leichten Presssitz in einen an einem Ende der inneren Hülse ausgebildeten Kragen eingeführt.

Dadurch, dass die Verbindung der äußeren Hülse mit der inneren Hülse fluiddicht ausgebildet ist, steht zwischen dem Umfang der inneren Hülse und dem Umfang der äußeren Hülse ein fluiddichtes Volumen zur Verfügung, dass mit einem Fluid, beispielsweise Wasser, gefüllt werden kann, um den Injektor im Betrieb zu kühlen.

In der inneren Hülse können Wärmeleitbuchsen, insbesondere graphithaltige Wärmeleitbuchsen vorhanden sein, um eine thermische Verbindung zwischen dem in der inneren Hülse angeordneten Injektor und dem Kühlwasser, das sich in dem Volumen zwischen der äußeren Hülse und der inneren Hülse befindet, herzustellen. Ist die innere Hülse nahe, das heißt mit einem möglichst kleinen Luftspalt, an dem Injektor ausgebildet, kann ggf. auf die Wärmeleitbuchsen verzichtet werden, da ein hinreichend schmaler Luftspalt eine ausreichende Wärmeübertragung von dem Injektor an das die innere Hülse umgebende Kühlfluid ermöglicht.

An der inneren Hülse ist wenigstens eine Aufnahme zur Verbindung mit einem Fluidanschluss ausgebildet, um Kühlfluid in das Volumen zwischen der inneren und der äußeren Hülse einzubringen und/oder aus dieser abzuführen. Der Fluidanschluss kann mit einem radialen oder axialen Abgang und in beliebiger Ausrichtung (Winkel) ausgebildet sein. Vorzugsweise sind wenigstens zwei Fluidanschlüsse, ein Zufluss und ein Abfluss, vorgesehen, um eine kontinuierliche Strömung von Kühlfluid durch das Kühlvolumen zu ermöglichen.

In einer Ausführungsform ist wenigstens ein Fluidanschluss an dem an der inneren Hülse ausgebildeten Kragen vorgesehen. Die Fluidanschlüsse können als Drehteil oder vorzugsweise als Rohrbiegeteil ausgebildet sein.

In einer Ausführungsform ist um einen Teilbereich des Injektors, der sich außerhalb der inneren Hülse befindet, ein Ventilgehäuse vorhanden. Das Ventilgehäuse grenzt im Bereich des Kragens an die innere Hülse an und ist mit dieser verbunden. Das Ventilgehäuse ist insbesondere dauerhaft, zum Beispiel durch Nieten oder Schweißen, mit der inneren Hülse verbunden. Dies hat den Vorteil, dass die Verbindung sehr stabil ist und gleichzeitig ein geringer Bauraum eingehalten werden kann.

Der Kragen an der inneren Hülse ist vorzugsweise so ausgebildet, dass er eine sichere Befestigung des Dosiermoduls an einem Abgasflansch ermöglicht. Beispielsweise ist an einem Bereich des Kragens eine Gegenkontur für eine V-Schelle ausgebildet, so dass das Dosiermodul mit Hilfe einer V-Schelle sicher am Abgasstrang befestigt werden kann.

Die Erfindung wird im Folgenden anhand der beiliegenden Figuren näher erläutert. Dabei zeigt:
- Fig. 1: eine Schnittansicht durch ein wassergekühltes Dosiermodul; und
- Fig. 2: einen Schnitt durch ein erfindungsgemäßes Dosiermodul.

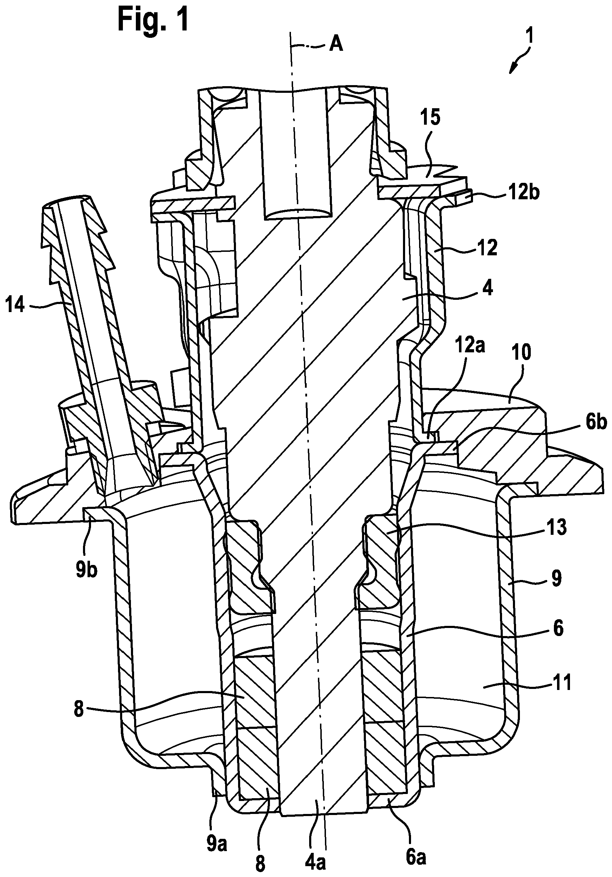

- Fig. 1: zeigt einen Längsschnitt durch ein wassergekühltes Dosiermodul 1.

Ein derartiges Dosiermodul 1 weist einen Injektor 4 zum Einspritzen von Fluid in einen in der Fig. 1 nicht gezeigten Abgasstrang auf, der sich im Wesentlichen zylinderförmig um eine Längsachse A erstreckt.

Um einen in der Fig. 1 unten dargestellten, einspritzseitigen Bereich des Injektors 4 ist eine ebenfalls im Wesentlichen zylinderförmig ausgebildete innere Hülse 6 ausgebildet, die in ihrer unteren Stirnseite eine Öffnung aufweist, durch die sich ein unteres, einspritzseitiges Ende 4a des Injektors erstreckt, um Fluid aus dem Injektor 4 in den Abgasstrang einzuspritzen.

Um den Umfang der inneren Hülse 6 ist eine äußere Hülse 9 angeordnet, die im Wesentlichen in Form eines zylinderförmigen Topfes rotationssymmetrisch um die Achse A ausgebildet ist. Dabei hat die äußere Hülse 9 einen größeren Durchmesser als die innere Hülse 6, so dass zwischen der inneren Hülse 6 und der äußeren Hülse 9 ein ringförmiges Volumen 11 ausgebildet ist, das zur Aufnahme eines kühlenden Fluids, insbesondere Kühlwasser, vorgesehen ist.

Die oberen Enden 6b, 9b der inneren Hülse 6 und der äußeren Hülse 9 sind durch einen scheibenförmigen Drehflansch 10 fluiddicht miteinander verbunden. Das untere Ende 9a der äußeren Hülse 9 ist in einem rechten Winkel nach unten parallel zur Achse A abgebogen und, zum Beispiel durch Verschweißen, fest mit dem äußeren Umfang der inneren Hülse 6 verbunden, so dass das Volumen 11, das zwischen der inneren Hülse 6 und der äußeren Hülse 9 ausgebildet ist, vollständig fluiddicht abgeschlossen ist. In dem Drehflansch 10 ist wenigstens ein Fluidanschluss 14 ausgebildet, der es ermöglicht, Kühlfluid, insbesondere Kühlwasser, in das Kühlvolumen 11 einzubringen und/oder aus diesem zu entnehmen. Vorzugsweise sind wenigstens zwei Fluidanschlüsse 14 vorgesehen, die als Zufluss und Abfluss betrieben werden, um eine kontinuierliche Strömung von Kühlfluid durch das Kühlvolumen 11 zu ermöglichen.

Um den Umfang des unteren Bereichs 4a des Injektors 4 sind ringförmig ausgebildete Wärmeleitbuchsen 8 angeordnet, die den Raum zwischen dem unteren Bereich 4a des Injektors 4 und der inneren Hülse 6 ausfüllen. Die Wärmeleitbuchsen 8, die beispielsweise Graphit enthalten, haben eine gute Wärmeleitfähigkeit und ermöglichen eine effektive Wärmeübertragung zwischen dem unteren Bereich 4a des Injektors 4 und einem Kühlfluid im Kühlvolumen 11.

Oberhalb der Wärmeleitbuchsen 8 ist ein Dichtelement 13 vorhanden, welches einen unteren Bereich des Volumens in der inneren Hülse 6 fluiddicht von einem oberen Bereich, der sich oberhalb des Dichtelements 13 befindet, abgrenzt.

Oberhalb der inneren Hülse 6 ist ein Ventilgehäuse 12 angeordnet, das rotationssymmetrisch um die Achse A ausgebildet und ebenfalls durch den Drehflansch 10 am oberen Ende 6b der inneren Hülse 6 fixiert ist.

Das obere Ende 12b des Ventilgehäuses 12 wird durch einen in der Fig. 1 nicht gezeigten Federclip gegen ein Sicherungsblech 15 gedrückt, das in radialer Richtung von außen in den Umfang des Injektors 4 eingreift und das Ventilgehäuse 12 am Injektor 4 fixiert.

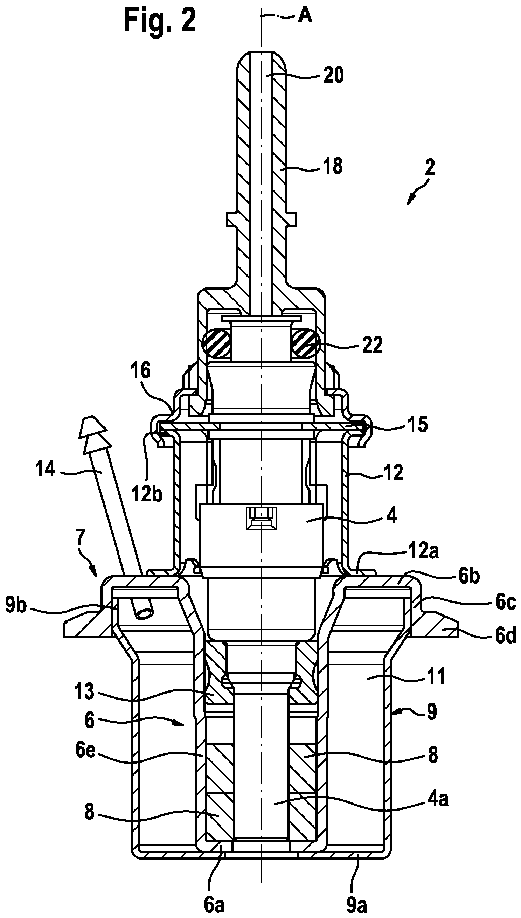

Fig. 2 zeigt eine Schnittansicht durch ein erfindungsgemäßes kühlbares Dosiermodul 2. Auch in einem erfindungsgemäßen Dosiermodul 2 ist ein Injektor 4, der sich im Wesentlichen entlang einer Längsachse A erstreckt, in einer um einen unteren Bereich 4a des Injektors 4 ausgebildeten inneren Hülse 6 angeordnet.

Diejenigen Merkmale, die mit den in der Figur 1 gezeigten Merkmalen identisch sind, sind mit den gleichen Bezugszeichen bezeichnet und werde nicht erneut um Detail beschrieben.

Ein becherförmig ausgebildeter Bereich 6e der innere Hülse 6 ist von einer ebenfalls becherförmig ausgebildeten äußeren Hülse 9 umgeben, so das zwischen der inneren Hülse 6 und der äußeren Hülse 9 ein Volumen 11 zur Aufnahme eines Kühlfluids ausgebildet ist, wie es aus der Fig. 1 bekannt ist.

Das obere, von der Einspritzöffnung abgewandte Ende der inneren Hülse 6 erstreckt sich ausgehend von dem becherförmigen Bereich 6e zunächst in radialer Richtung nach außen und in einem größeren Abstand von der Achse A als der untere, becherförmige Bereich 6e wieder nach unten in Richtung der Einspritzöffnung des Injektors 4, wodurch um das obere Ende 6b des becherförmigen Bereichs 6e der inneren Hülse 6 ein sich in radialer Richtung von der Achse A nach außen erstreckender Kragen 7 ausgebildet ist.

Ein oberes Ende 9b der äußeren Hülse ist mit einer elastischen Spannung in den Kragen 7 an der unteren Hülse 6 eingeführt, so das zwischen dem oberen Bereich 9b der äußeren Hülse und dem Kragen 7 der inneren Hülse 6 ein Presssitz ausgebildet ist. Um das Kühlvolumen 11 fluiddicht abzudichten, wird der obere Bereich 9b der äußeren Hülse mit dem Kragen 7 der inneren Hülse 6 verbunden, beispielsweise verschweißt oder verlötet.

Der erfindungsgemäße elastische Presssitz zwischen dem oberen Ende 9b der äußeren Hülse 9 und dem an der inneren Hülse 6 ausgebildeten Kragen 7 ermöglicht es, Toleranzen der beiden Hülsen 6, 9 auszugleichen, wie sie beispielsweise auftreten, wenn sich die Hülsen 6, 9 bei Temperaturänderungen ausdehnen bzw. verkürzen.

In dem Kragen 7 der inneren Hülse 6 ist ein Fluidanschluss 14 ausgebildet, der es ermöglicht, ein Kühlfluid, insbesondere Kühlwasser, in das Kühlvolumen 11 einzubringen und/oder aus diesem zu entnehmen. Vorzugsweise sind wenigstens zwei Fluidanschlüsse 14 vorgesehen, die als Zufluss und/oder Abfluss betrieben werden können und eine kontinuierliche Strömung von Kühlfluid durch das Kühlvolumen 11 ermöglichen.

Ein unterer, stirnseitiger Bereich 9a der äußeren Hülse 9 ist, zum Beispiel durch Verschweißen, fest mit einem unteren, stirnseitigen Bereich 6a der inneren Hülse 6 verbunden.

Der Raum zwischen dem unteren Bereich 4a des Injektors 4 und der inneren Hülse 6 ist durch ringförmige, wärmeleitfähige (Graphit-)Buchsen 8 ausgefüllt. Ist, in einem nicht gezeigten Ausführungsbeispiel, der becherförmige Bereich 6e der innere Hülse 6 nahe, d.h. in einem möglichst kleinen Abstand vom Umfang des Injektors 4 ausgebildet, kann auf Wärmeleitbuchsen 8 verzichtet werden, da ein hinreichend schmaler Luftspalt eine ausreichende Wärmeübertragung von dem Injektor 4 an das umgebende Kühlwasser im Kühlwasservolumen 11 ermöglicht.

Ein oberhalb der Hülsen 6, 9 um den Umfang des Injektors 4 angeordnetes Ventilgehäuse 12 ist an dem Kragen 7, der an der inneren Hülse 6 ausgebildet ist, fixiert.

Das obere, von den Hülsen 6, 9 abgewandte Ende 12b des Ventilgehäuses 12 ist durch einen Befestigungsring 16, der rotationssymmetrisch um die Achse A angeordnet ist, fest mit einem scheibenförmigen Sicherungsblech 15, das sich in radialer Richtung nach innen in eine in dem Injektor 4 ausgebildete Ausnehmung erstreckt, am Injektor 4 fixiert. Die Fixierung des Befestigungsringes 16 erfolgt beispielsweise durch Clinchen, Bördeln, Schweißen, Löten, Nieten oder Schrauben.

Mit dem Befestigungsring 16 ist auch ein Anschlussstück 18 an dem Injektor 4 und dem Ventilgehäuse 12 fixiert. In dem Anschlussstück 18 ist ein entlang der Achse A verlaufender Fluidkanal 20 ausgebildet, durch den dem Injektor 4 im Betrieb das einzuspritzende Fluid zugeführt wird. Ein Dichtungsring (O-Ring) 22 dichtet die Verbindung zwischen dem Injektor 4 und dem Anschlussstück 18 fluiddicht ab.

Der äußere Umfang 6d des im oberen Bereich der inneren Hülse 6 ausgebildeten Kragens 7 ist so geformt, dass er zur Aufnahme einer V-Schelle geeignet ist, so dass ein erfindungsgemäßes Dosiermodul 2 mit Hilfe einer V-Schelle an dem Abgasstrang befestigt werden kann.

Die Ausbildung der Injektoraufnahme und der Schellenaufnahme in einem einzigen Teil, der inneren Hülse 6, ist vorteilhaft, da dadurch ein Bauteil und fluiddichter Fügeprozess eingespart werden können.

Die Fügeprozesse, wie z.B. Schweißen, mit denen die einzelnen Element eines erfindungsgemäßen Dosiermoduls miteinander verbunden sind, sind derart ausgebildet, dass sie den Randbedingungen, denen ein erfindungsgemäßes Dosiermodul 2 im Betrieb ausgesetzt ist, insbesondere den im Betrieb auftretenden Kräften, Temperaturen und Temperaturschwankungen standhalten.

Ein erfindungsgemäßes Dosiermodul 2 umfasst keinen in der Herstellung aufwändigen und kostenträchtigen Drehflansch 10, wie er in einem herkömmlichen gekühlten Dosiermodul 1 verwendet wird. Die Erfindung stellt daher ein kostengünstiges und betriebssicheres Dosiermodul 2 zur Verfügung, das mit Wasser gekühlt werden kann.

## Patentansprüche

1. Kühlbares Dosiermodul (2) mit
einer inneren Hülse (6), die zur Aufnahme eines sich im Wesentlichen in einer Längsrichtung erstreckenden Injektors (4) derart ausgebildet ist, dass die innere Hülse (6) wenigstens über einem Teilbereich der Längserstreckung des Injektors (4) um dessen Umfang angeordnet ist; und einer äußeren Hülse (9), welche die innere Hülse (6) umgibt, so dass zwischen der inneren Hülse (6) und der äußeren Hülse (9) ein zur Aufnahme eines fluiden Kühlmittels geeignetes Volumen (11) ausgebildet ist, **dadurch gekennzeichnet, dass**
ein oberes, von der Einspritzöffnung abgewandtes Ende der inneren Hülse (6) als ein sich in radialer Richtung erstreckender Kragen (7) ausgebildet ist, der zu Aufnahme und Führung eines Endbereich (9b) der äußeren Hülse (9) derart ausgebildet ist, dass ein Bereich des Kragens (7) den Endbereich (9b) der äußeren Hülse (9) umschließt, so dass der Endbereich (9b) der äußeren Hülse (9) fluiddicht mit dem Kragen (7) verbunden ist, wobei an dem Kragen (7) der inneren Hülse (6) wenigstens ein Fluidanschluss (14) ausgebildet ist; und
wobei ein unterer, stirnseitger, der Einspritzöffnung zugewandter Bereich (9a) der äußeren Hülse (9) durch Verschweißen fluiddicht mit einem unteren, stirnseitigen, der Einspritzöffnung zugewandten Bereich (6a) der inneren Hülse (6) verbunden ist.

2. Kühlbares Dosiermodul (2) nach einem der vorangehenden Ansprüche, wobei der Endbereich (9b) elastisch und so in den Kragen (7) eingeführt ist, so dass zwischen dem Endbereich (9b) und dem Kragen (7) ein Presssitz ausgebildet ist.

3. Kühlbares Dosiermodul (2) nach Anspruch 1 oder 2, wobei zwischen dem Injektor (4) und der inneren Hülse (6) wenigstens eine Wärmeleitbuchse (8) angeordnet ist.

4. Kühlbares Dosiermodul (2) nach einem der vorangehenden Ansprüche, wobei zwischen der inneren Hülse (6) und dem Injektor (4) ein Luftspalt ausgebildet ist.

5. Kühlbares Dosiermodul (2) nach einem der vorangehenden Ansprüche, wobei der Fluidanschluss (14) als Rohrbiegeteil ausgebildet ist.

6. Kühlbares Dosiermodul (2) nach einem der vorangehenden Ansprüche, mit einem um einen Teilbereich der Längserstreckung des Injektors (4) angeordneten Ventilgehäuse (12), wobei das Ventilgehäuse (12) vorzugsweise durch Schweißen, Nieten oder Verschrauben fest mit der inneren Hülse (6) verbunden ist.

7. Kühlbares Dosiermodul (2) nach einem der vorangehenden Ansprüche, wobei die innere Hülse (6) mit einer Gegenkontur zur Aufnahme einer V-Schelle

## Claims

1. Coolable dosing module (2) having
an inner sleeve (6) which is designed to receive an injector (4), which extends substantially in a longitudinal direction, such that the inner sleeve (6) is arranged around the circumference of the injector (4) at least over a partial region of the longitudinal extent of said injector; and an outer sleeve (9) which surrounds the inner sleeve (6) such that a volume (11) suitable for receiving a fluid coolant is formed between the inner sleeve (6) and the outer sleeve (9), **characterized in that**
an upper end, averted from the injection opening, of the inner sleeve (6) is formed as a collar (7) which extends in a radial direction and which is designed to receive and guide an end region (9b) of the outer sleeve (9) such that a region of the collar (7) surrounds the end region (9b) of the outer sleeve (9), so that the end region (9b) of the outer sleeve (9) is connected in fluid-tight fashion to the collar (7), wherein at least one fluid connector (14) is formed on the collar (7) of the inner sleeve (6); and
wherein a lower, face-side region (9a), facing towards the injection opening, of the outer sleeve (9) is connected in fluid-tight fashion by welding to a lower, face-side region (6a), facing towards the injection opening, of the inner sleeve (6).

2. Coolable dosing module (2) according to one of the preceding claims, wherein the end region (9b) is elastic and is inserted into the collar (7) such that an interference fit is formed between the end region (9b) and the collar (7).

3. Coolable dosing module (2) according to Claim 1 or 2, wherein at least one heat-conducting bushing (8) is arranged between the injector (4) and the inner sleeve (6).

4. Coolable dosing module (2) according to one of the preceding claims, wherein an air gap is formed between the inner sleeve (6) and the injector (4).

5. Coolable dosing module (2) according to one of the preceding claims, wherein the fluid connector (14) is in the form of a tubular bent part.

6. Coolable dosing module, (2) according to one of the preceding claims, having a valve housing (12) which is arranged around a partial region of the longitudinal extent of the injector (4), wherein the valve housing (12) is connected fixedly to the inner sleeve (6) preferably by welding, riveting or screw connection.

7. Coolable dosing module (2) according to one of the preceding claims, wherein the inner sleeve (6) is formed with a counterpart contour for receiving a V clip.

## Revendications

1. Module de dosage (2) refroidi, présentant
une douille intérieure (6) configurée pour reprendre un injecteur (4) qui s'étend essentiellement dans le sens de sa longueur, la douille intérieure (6) étant disposée autour de la périphérie de l'injecteur (4) sur au moins une partie de son extension en longueur et
une douille extérieure (9) qui entoure la douille intérieure (6) de telle sorte qu'entre la douille intérieure (6) et la douille extérieure (9) soit formé un volume (11) qui convient pour reprendre un agent de refroidissement fluide,
**caractérisé en ce que**
une extrémité supérieure, non tournée vers l'ouverture d'injection, de la douille intérieure (6) est configurée comme collet (7) s'étendant dans la direction radiale et configuré pour reprendre et guider une partie d'extrémité (9b) de la douille extérieure (9), une partie du collet (7) entourant la partie d'extrémité (9b) de la douille extérieure (9) de sorte que la partie d'extrémité (9b) de la douille extérieure (9) est reliée au collet (7) de manière étanche aux fluides,
au moins un raccordement (14) aux fluides étant formé sur le collet (7) de la douille intérieure (6) et
une partie inférieure frontale (9a), tournée vers l'ouverture d'injection, de la douille extérieure (9) est reliée de manière étanche aux fluides, par soudage, à une partie inférieure frontale (6a), tournée vers l'ouverture d'injection, de la douille intérieure (6).

2. Module de dosage (2) selon la revendication précédente, dans lequel la partie d'extrémité (9b) est insérée élastiquement dans le collet (7) de telle sorte qu'un siège comprimé soit formé entre la partie d'extrémité (9b) et le collet (7).

3. Module de dosage (2) selon les revendications 1 ou 2, dans lequel au moins une douille thermiquement conductrice (8) est disposée entre l'injecteur (4) et la douille intérieure (6).

4. Module de dosage (2) selon l'une des revendications précédentes, **caractérisé en ce qu'**un entrefer est formé entre la douille intérieure (6) et l'injecteur (4).

5. Module de dosage (2) selon l'une des revendications précédentes, dans lequel le raccordement (14) aux fluides est configuré comme partie tubulaire cintrée.

6. Module de dosage (2) selon l'une des revendications précédentes, présentant un boîtier de soupape (12) disposé autour d'une partie de l'extension longitudinale de l'injecteur (4), le boîtier de soupape (12) étant relié de préférence par soudage, rivetage ou vissage à la douille intérieure (6), solidairement.

7. Module de dosage (2) selon l'une des revendications précédentes, dans lequel la douille intérieure (6) est réalisée avec un contour complémentaire pour recevoir une coque en V.
